# EUROPEAN PATENT SPECIFICATION

(11) **EP 3 032 378 B1**
(45) Date of publication and mention of the grant of the patent: **07.02.2018**
(21) Application number: 14197150.7
(22) Date of filing: 10.12.2014
(51) Int. Cl.: G06F 3/01

(54) **Image processing apparatus and image processing method**
Bildverarbeitungsvorrichtung und Bildverarbeitungsverfahren
Appareil et procédé de traitement d'images

(43) Date of publication of application: 15.06.2016
(73) Proprietor: Application Solutions (Electronics and Vision) Limited, Lewes, East Sussex BN7 2 AQ (GB)
(72) Inventor: Guerreiro, Rui, Brighton, BN1 5PP (GB)
(74) Representative: Büchner, Jörg

(56) References cited:
- US-A1- 2011 273 543
- US-A1- 2013 156 265

## Description

The present invention relates to an image processing apparatus and an image processing method. In particular, the present invention relates to apparatus and a method for processing three-dimensional image data.

### Background of the invention

Head-up displays (HUD) work by projecting a two-dimensional image onto a two-dimensional surface of a transparent window the user looks out from. For instance, such a transparent window may be the windscreen of a vehicle. To view three-dimensional data on the head-up display there are currently two alternatives. According to a first alternative, the user would have to wear special glasses. However, the use of such special glasses is uncomfortable to the user. Alternatively, the head-up display surface would have to be altered to enable auto stereoscopic projection. Such surfaces for auto stereoscopic three-dimensional projection are known, for instance, from TV applications. However, such modified surface for projecting three-dimensional images on a transparent window of a head-up display is undesirable, since it would create optical artefacts when looking through such a window.

Hence, there is a need of an image processing apparatus and an image processing method for processing three-dimensional image data on a two-dimensional display area enabling the viewing of three-dimensional images without causing uncomfort to the user or introducing optical artefacts when looking through a transparent display surface.

US 2013/0156265 A1 discloses a system and a method for analyzing three-dimensional media content. An eye tracking system monitors a point of gaze of a user. If the focus of the user is different from the distance of the three-dimensional image content, the image content may be rendered at a lower resolution or the image content may be blurred. After processing the three-dimensional image content, the image content is displayed on a special display which is capable of rendering media content in 3D.
US 2011/276543 A1 relates to an image processing apparatus for stereoscopically displaying two-dimensional image data, comprising generating a left-side image and a right-side image by shifting the two-dimensional image left and right.

### Disclosure of the invention

The present invention is defined according to the independent claims. Further embodiments of the invention are defined by the features of the dependent claims. The present invention takes into account that when a user is focussing at an object at a particular depth, this object and further objects at the same depth are focused by the user. Other objects in a depth different from the depth of the focused object are defocused. Hence, in the perception of the user all objects at the depth of the focused object are sharp, while the other objects in a different depth are out of focus and blurred.

Hence, an idea underlying the present invention is to identify the position a user is looking at (gaze point) and to determine a depth value of an element which is to be displayed at this position. Based on this determined depth value all objects having a similar depth value as the object at the gaze point of a user are displayed sharp, while the remaining objects having a different depth value are blurred and displayed out of focus. In order to improve the three-dimensional perception, the degree of blurring the elements having a different depth value is set depending on the difference between an absolute value of the depth value at the gaze point of the user and the depth value of an element to be displayed.

In this way, it is possible to enable a perception of three-dimensional image data on a two-dimensional display area. Such an image processing of a three-dimensional image data for displaying the three-dimensional image data on a two-dimensional display area can be applied to any field in which three-dimensional image data have to be displayed on a two-dimensional display area. For instance, it is possible to perceive three-dimensional image data on head-up displays, for instance head-up displays in vehicles, airplanes, etc. Further to this, a general application for depth perception at TVs, healthcare, mobile phones, table computers etc. are possible, too.

Since it is necessary to determine a gaze point of a particular user, i.e. the position on the display area where a user is looking at, the processing of a three-dimensional image data according to the present invention is preferably applicable to all applications when image data have to be provided to a single user.

The image processing of three-dimensional image data according to the present invention is applicable for image data comprising a single, static frame, as well as for image data comprising a plurality of frames which have to be displayed successively, for instance motion pictures. In order to adapt the displayed image data, the location at which the user is gazing is constantly determined and the image data to be displayed are adapted accordingly. In particular, the gaze point of the user can be determined at predetermined time intervals. If a plurality of successive frames have to be displayed, for instance a sequence of a film, this time interval may be the time interval of the frames to be displayed. Alternatively, the time interval may be a fractional amount of the time interval of the frames to be displayed.

According to an embodiment of the present invention, the gaze detecting means of the image processing apparatus comprises a camera adapted to monitor an eye of the user. By monitoring at least one eye of the user the gaze point of the user on the display area can be easily detected. In order to improve the reliability of the gaze point detection, the camera may monitor both eyes of the user. In this way, the reliability of the gaze point detection can be improved. For instance, the gaze detecting means may compare the result of the gaze point detection of both eyes in order to verify the result of the gaze point detection. Alternatively, the gaze detecting means may comprise a selecting means for selecting one out of the both eyes of the user in order to determine the gaze point of the user.

According to a further embodiment, the image processing apparatus comprises alerting means adapted to identify a predetermined movement of the gaze point of the user. If a predefined movement of the gaze point of the user has been identified, the alerting means outputs an alert. Such an alert may be an optical and/or acoustical signal. Alternatively, the alert may be an electronic signal which can be further processed. For instance, the alerting means may output a signal to an advanced driver assistance system. Based on this signal, the advanced driver assistance system may cause a predetermined operation, for instance reducing the speed or stopping the vehicle. In this way, the movement of the gaze point of a user may be analyzed in order to survey the attention of the user. If the alerting means comes to the conclusion that the user is tired or inattentive, a signal may be output to the user in order to increase the intension of the user or to initiate a predetermined operation such as stopping the vehicle. Further operations for supervising the attention of the user and initiating predetermined operations may be also possible.

According to a further embodiment, the image processing apparatus comprises displaying means adapted to display the blurred frame on the display area. In this way, the processed image data can be provided to a user and the user can watch the 3-D image data on a two-dimensional display area.

According to a particular embodiment, the display means may comprise a head-up display, a projector or a display of a portable computer, a tablet computer or a smartphone. Further means for displaying the processed image, in particular the blurred frame, on a display area are also possible.

According to a further embodiment of the image processing method, the method further comprises a step of displaying the blurred frame on the display area. In this way, the processed image data can be easily provided to a user.

According to a further embodiment, the step of blurring an area in the frame comprises superimposing the image area and a copy of the image area shifted by a predetermined offset. By superimposing the image area and a copy of the shifted image area it is possible to achieve an impression of blurred image data very similar to the real impression of objects being at a depth different from the depth of the focused object in the displayed frame.

According to a particular embodiment, the predetermined offset by which the image area is shifted, is determined based on the difference between the determined depth value at the position in the depth map corresponding to the position of the identified gaze point in the display area and the depth value in the depth map corresponding to the position of the area in the frame. In particular, the offset is determined based on the absolute value of the difference. In this way, the blurring effect increases if the difference between the depth value of the focused object and the further object increases.

According to a further embodiment, the step of blurring an area in the frame comprises computing pixel values within the frame based on the pixel values of adjacent pixels. In this way, an easy method for blurring an image area can be achieved.

According to a further embodiment, the step of obtaining image data comprises a step of receiving stereoscopic image data and computing a frame and a depth map based on the received stereoscopic image data. Alternative operations for generating a depth map and a corresponding frame are also possible. In this way, necessary data for performing the image processing method according to the present invention can be obtained.

According to a further aspect, the present invention provides a computer program product adapted to perform the image processing method. In this way, the image processing method can be realized by a microprocessor or a computer executing such a computer program product.

Further embodiments, advantages, features, aspects and benefits of the present invention become apparent from the description and figures provided in the following.

### Brief description of the drawings

The description herein makes reference to the accompanying drawings wherein same reference numerals refer to same or similar parts:
- Fig. 1:: illustrates three-dimensional image data according to an embodiment;
- Fig. 2:: illustrates a blurred frame;
- Fig. 3:: illustrates another blurred frame;
- Fig. 4:: illustrates a flowchart illustrating an image processing method according to an embodiment; and
- Fig. 5:: illustrates an image processing apparatus according to a further embodiment.

### Description of embodiments

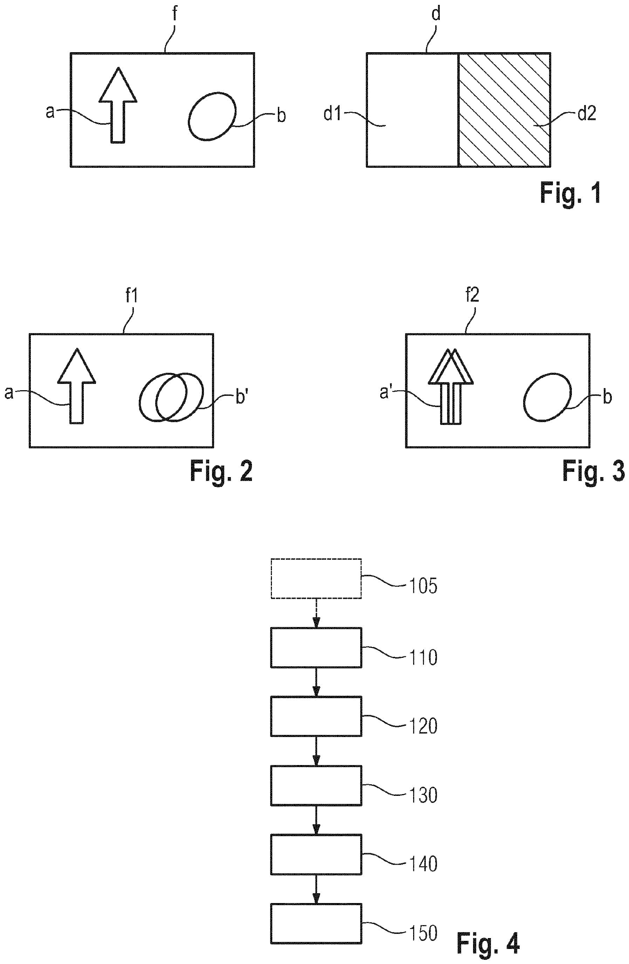

Figure 1 shows a schematical illustration of three-dimensional image data. The image data comprise at least one frame f, illustrated at the left-hand side of Fig. 1 and a corresponding depth map d illustrated on the right-hand side of Figure 1. For instance, the data of the frame f may be represented by a two-dimensional area, wherein the first dimension represents the width of the frame and the second dimension represents the height of the frame. Each element of this two-dimensional array may represent a pixel value of the frame. In this way, a monochromatic representation of a two-dimensional frame is possible. Additionally, a colored frame may be represented by a plurality of two-dimensional array - or a three-dimensional array. In this way, the plurality of pixel values representing the individual color values can be associated to each position of the two-dimensional frame. Additionally, a depth map d can be also represented by a two-dimensional array, wherein each element of this two-dimensional array represents a depth value of a corresponding pixel in the frame. Preferably, the first and the second dimension of the frame f corresponds to the first and the second dimension of the depth map d. Alternatively, if the first and/or the second dimension of the frame f is different from the first and/or second dimension of the depth map d, the depth map d or the frame f may be rescaled in order to match the dimensions of the frame f and the depth map d.

For illustrative purposes, frame f comprises only two elements a and b. The first element a is illustrated by an arrow, and the second element b is illustrated by a circle. Corresponding depth map d in this embodiment comprises only two different depth values d1 and d2. This limitation by only two different depth values d1 and d2 is only for illustrative purposes and does not limit the present invention.

Figure 2 illustrates a representation f1 of the frame on an image area when a user is looking at the left-hand side of the image area. For instance, the user may look at gaze point g. In this case, all image data of the image element a (the arrow) have the same values d1 in the depth map d. Hence, the image element a in the left-hand side is displayed sharp. Further, the values d2 in the depth map d of the second image element b' (the circle) are different from the depth map values d1 of the first element a. Hence, the image data in the right-hand side corresponding to the other depth value d2 are blurred.

Figure 3 illustrates a representation f2 of the frame when a user is looking on the right-hand side of a display area on which the frame is displayed. In this case, for instance, the user may look at gaze point g on the right-hand side. Since all image data of the second element b (the circle) have the same values d2 in the depth map d, the whole circle is displayed sharp. Further, since the first element a' on the left-hand side has values d1 in the depth map d which are different from the value in the depth map d corresponding to the depth map value at the gaze point g, the first image element a' is blurred.

Accordingly, by permanently monitoring the gaze point g of a user, either the first element a or the second element b is displayed sharp, while the other element is blurred. Thus, only the image element at the area of the gaze point g is displayed sharp, while the remaining elements having values in the depth map which are different from the depth map value at the gaze point g are blurred, since these elements are out of focus of the user.

Figure 4 illustrates a flowchart of an image processing method according to an embodiment. Three-dimensional image data are obtained in step 110. The three-dimensional image data may comprise at least one frame f and a corresponding depth map d associated with the frame f. As already outlined before, frame f and depth map d may have corresponding size. Alternatively, if the size of a frame f and a depth map d are different, frame f or depth map d may be rescaled in order to obtain similar dimensions. Frame f may comprise either monochromatic data or alternatively colored image data.

If the image data are not provided as a frame f and corresponding depth map d, an additional step for computing image data in form of a frame f and a corresponding depth map d may be applied. For instance, the image data may be received in a step 105 in form of stereoscopic image data. Such stereoscopic image data may comprise two slightly different frames, one frame corresponding to a view for a left eye and one frame corresponding to the view of a right eye. For instance, such stereoscopic image data may be captured by a stereoscopic camera. Alternatively, such stereoscopic image data may be also computed or generated in another way. After receiving stereoscopic image data in a step 105, a frame f and a corresponding depth map d can be computed based on the received stereoscopic image data. The computation of frame f and depth map d based on the obtained image data, for instance based on stereoscopic image data is well-known and may be applied based on any conventional processing algorithm.

Further, in step 120 a gaze point g of the user is identified. In this step 120, a point on a display area is identified on which a user is looking at. For this purpose, any conventional method for identifying such a gaze point g of a user may be applicable. For instance, a camera may be used for monitoring at least one eye of a user. Based on this monitoring of one eye or of both eyes of the user, it is possible to determine the position on a display area, where a user is looking at and to identify the gaze point g of the user. Such a camera may be located at a predetermined position with respect to the display area. Alternatively, such a camera may be also applied at special glasses, a user is wearing. Any other possibility for positioning a camera or another method for determining the gaze point of a user is possible, too.

After the gaze point g of a user has been identified, a further step for determining a corresponding depth value in a depth map is applied. In this step 130, the depth value at a position in the depth map is determined, wherein the position in a depth map corresponds to the position of the identified gaze point g on the display area. Hence, the determined depth value corresponds to the depth value of an element which is displayed on the display area corresponding to the gaze point g of the user on the display area.

After having determined the depth value at the position of the gaze point g of the user, all areas of the frame f are determined at which the values in the corresponding depth map d having values different from the depth value at the gaze point g of a user. For this purpose, the areas in the frame f where the corresponding values in the depth map d are the same at the depth value at the gaze point g are kept unchanged. The remaining areas in the frame f are blurred in step 140. For instance, the blurring 140 of an image area having a corresponding depth value different from the depth value at the gaze point g may be achieved by superimposing an image area and a copy of the image area shifted by predetermined offset. In this way, such an image area appears to a user defocused. Hence, a user may consider such an image area as an image area having elements with a distance different from the element at the gaze point g. In order to improve the three-dimensional appearance of the blurred frame, the degree of blurring the image areas in a frame f may be performed depending on the difference between the depth value at the gaze point g and the depth value of the image area to be blurred. For instance, the predetermined offset for shifting the copy of the image area before superimposing the image area and the shifted copy may be computed based on this difference between the depth value of the gaze point and the depth value of the image area to be blurred. In particular, the absolute value of this difference may be considered for blurring the frame f. For instance, the degree of blurring may be determined based on a linear correspondence with the difference between the depth value at the gaze point g at the depth value at the image area to be blurred. Alternatively, quadratic or exponential correspondences may be also possible.

According to another embodiment, step 140 for blurring the image area may be applied by computing the pixel values based on adjacent pixel values. For instance, a blurring 140 may be also achieved by determining a weighted average of adjacent pixel values. In this case, the an impact of the adjacent pixel values or the number of adjacent pixel values may depend on the amount of the difference between the depth value at the gaze point g and the depth value of the image area to be blurred.

After blurring the frame f based on the gaze point g of a user and the difference between the depth value in the depth map d at the gaze point g and the depth value of an image area, such a blurred frame may be displayed in step 150 on an image area. For instance, such an image area may be a two-dimensional area of a head-up display, for instance a window such as a windscreen of a car. However, the present invention is not limited to displaying three-dimensional image data on a windscreen of a car or to a head-up display. Additional, it is also possible to display a blurred frame of three-dimensional image data by any other device having a two-dimensional display area. For instance, the image data may be also displayed on a display of a mobile phone, in particular on the display of a smartphone, or a tablet computer, or any other portable computer display. Additionally, it is also possible to display such a blurred frame on a TV screen or any other display device.

According to an embodiment, the method for processing image data may be performed by a microprocessor of a computer or another processing device. For this purpose, a computer program product may be provided having instructions stored thereon for performing the above outlined method.

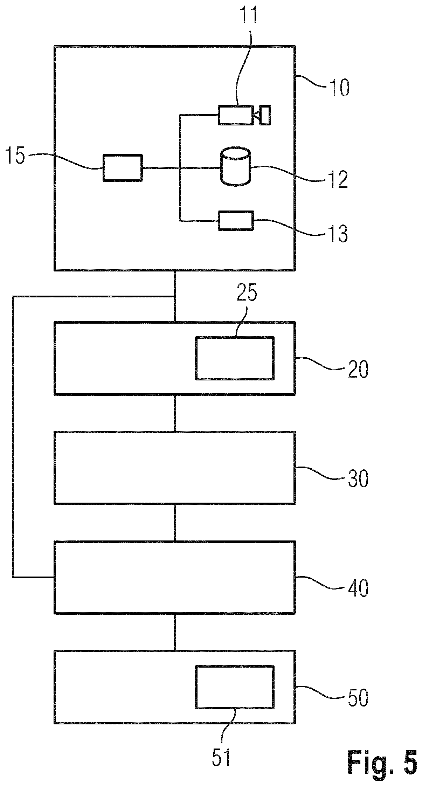

Figure 5 shows an image processing apparatus 1 for processing three-dimensional image data. The image processing apparatus 1 comprises image data obtaining means 10, gazed detection means 20, depth determining means 30 and blurring means 40. Additionally, the image processing apparatus may further comprise displaying means 50. The image data obtaining means 10 obtains image data as already outlined in connection with the image processing method. The image data may comprise at least one frame f and a corresponding depth map d. Alternatively, the image data may comprise the plurality of frames and corresponding depth maps. For instance, the image data may relate to a sequence of motion pictures. The image data may be obtained from camera system 11, storage medium 12, for instance a hard disc drive, or the image data may be generated by image data generating means 13. Further sources for providing three-dimensional image data are possible, too. If the three-dimensional image data are not provided as frame f and corresponding depth map d, the image data may be converted by image data converting means 15 into frame f and corresponding depth map d. For instance, image data converting means 15 may obtain stereoscopic image data and process this image data into frame f and depth map d. Such a conversion of image data may be achieved, for instance, by any conventional image conversion algorithm.

Gaze detecting means 20 identifies a gaze point g of a user on display area 51. For instance, gaze detecting means 20 may comprise at least one camera for monitoring one or two eyes of the user. As already outlined above, a camera may be mounted close to display area 51, or at least at a fixed, predetermined position with respect to the display area 51. Alternatively, gaze detecting means 20 or at least a camera of gaze detecting means 20 may be mounted on special glasses of a user.

If gaze detecting means 20 monitors both eyes of a user, the two results of the determination of both eyes may be used to verify the result of the gaze detection. For instance, the results of the left eye and the right eye may be compared, and the detected gaze point g is only accepted if the results are the same or at least similar. For this purpose, the difference of the results has to be less than a predetermined threshold value. Alternatively, only one eye of a user may be monitored for determining the gaze point g of the user. According to a particular embodiment, a user may select whether the left eye or the right eye of the user is monitored for determining the gaze point g. In this way, a reliable detection of a gaze point g may be achieved, even if only one eye of a user can be monitored.

Further, gaze detecting means 20 may monitor the movement of the gaze point g of the user. In particular, gaze detecting means 20 may comprise an alerting means 25 for analyzing the movement of the gaze point of a user. If such an alerting means 25 recognizes a predetermined movement of the gaze point g, alerting means 25 may output an alert. Such an alert may be an optical or acoustical signal. Additionally or alternatively, alerting means 25 may output a signal to a further component, for instance an advanced driver assistance system of a car. After indicating such a predetermined movement of a gaze point of a user, the advanced driver assistance system may initiate a particular operation, such as reducing the speed or stopping the car.

Additional operations are also possible. In this way, alerting means 25 may recognize an insufficient attention of a user based on the movement of gaze point g of the user. After having recognized such an insufficient attention of the user based on the predetermined movement of the gaze point g, any further operation is possible in order to increase the attention of the user or to perform an operation in order to avoid a dangerous situation.

Based on the determined gaze point g of a user, depth determining means 30 determines a depth value at a position in the depth map d obtained by obtaining means 10 corresponding to the position in the identified gaze point g on the display area 51. After having determined the depth value at the position in the depth map d corresponding to the position of the identified gaze point g on the display area 51, blurring means 40 blurs an area in the frame f. The blurring is performed based on a difference between the determined depth value and the depth value in the depth map d corresponding to the position of the gaze point g on the display area 51. For example, blurring means 40 may perform the blurring by superimposing an image area and a shifted copy of the image area. In this case, the shifting between the image area and the shifted copy may be determined based on the amount of the difference between the depth value and the depth map d at the gaze point g and the depth value of the image area to be blurred. Alternatively, the blurring may be also performed by averaging adjacent pixel values. Any other method for blurring the image area is also possible.

The term "image area" used in connection with the image processing method and the image processing apparatus relates to an area in the frame f having the same or at least almost the same depth values in the corresponding depth map d. Such an image area may relate to a particular element in the frame. However, any other method for determining areas in the frame f having similar properties with respect to the depth value in the corresponding depth map d are possible. In particular, it is also possible to perform a blurring of a frame f for each pixel or a predetermined area of adjacent pixels, separately.

After having blurred the frame of the obtained image data by blurring means 40, the blurred image frame may be displayed on a display area by displaying means 50. Such a display may be, for instance, a head-up display, a display of a mobile phone or a portable computer, or any other two-dimensional display apparatus.

Summarizing, the present invention relates to an image processing apparatus and an image processing method for processing three-dimensional image data in order to display the processed image data on a two-dimensional display enabling a three-dimensional impression to a user. For this purpose, a gaze point of a user on a display is identified, and the areas in the frame having a depth close to the depth of the gaze point are displayed sharp. The remaining areas having a different depth are defocused by blurring such image areas. For this purpose, the present invention obtains image data comprising at least a frame and a depth map associated with the frame, detects a gaze point of a user on the display area, determines a depth value at the position in the depth map corresponding to the identified gaze point and blurs an area in the frame based on the difference between the determined depth value and the depth value in the depth map corresponding to the area in the frame.

In this way, a user will get a three-dimensional impression of a displayed frame, even though such a frame is displayed only on a two-dimensional surface. Hence, a three-dimensional impression can be achieved without the need of additional components such as special glasses and without the need of a special surface on which the image data are displayed on.

## Claims

1. An image processing apparatus (1) for processing 3D-image data, comprising:
image data obtaining means (10) adapted to obtain image data to be displayed on a display area (51), the image data comprising a frame (f) and a depth map (d) associated with the frame (f);
gaze detecting means (20) adapted to identify a gaze point (g) of a user on the display area (51);
depth determining means (30) adapted to determine a depth value at a position in the depth map (d) corresponding to the position of the identified gaze point (g) in the display area (51); and
blurring means (40) adapted to blur an image area in the frame (f) based on the difference between the determined depth value and a depth value in the depth map (d) corresponding to the position of the image area in the frame (f),
**characterized in that**
said blurring means is adapted to superimpose the image area and a copy of the image area shifted by a predetermined offset,
wherein said predetermined offset is determined based on the difference between the determined depth value at the position in the depth map (d) corresponding to the position of the identified gaze point (g) in the display area (51) and the depth value in the depth map (d) corresponding to the position of the area in the frame (f);
wherein elements in the image area having values in the depth map which are different from the depth map value at the gaze point (g) are blurred, and only an image element at an area of the gaze point (g) is displayed sharp.

2. The image processing apparatus (1) according to claim 1, wherein said gaze detecting means (20) comprises a camera adapted to monitor an eye of the user.

3. The image processing apparatus (1) according to claim 2, further comprising alerting means (25) adapted to identify a predefined movement of the gaze point (g) of the user and outputting an alert if a predefined movement of the gaze point (g) of the user has been identified.

4. The image processing apparatus (1) according to any of claims 1 to 3, further comprising display means (50) adapted to display the blurred image area in the frame on the display area (51).

5. The image processing apparatus (1) according to claim 4, wherein said display means (50) comprises a head-up-display, a projector or a display of a portable computer, a table computer or a smartphone.

6. An image processing method for processing 3D-image data to be displayed on a display area (51), the method comprising the steps of:
obtaining (110) image data, said image data comprising a frame (f) and a depth map (d) associated with the frame (f);
identifying (120) a gaze point (g) of a user on the display area (51);
determining (130) a depth value at a position in the depth map (d) corresponding to the position of the identified gaze point (g) on the display area (51); and
blurring (140) an image area in the frame (f) based on the difference between the determined depth value and a depth value in the depth map (d) corresponding to the position of the image area (51) in the frame (f),
**characterized in that**
said step of blurring (140) an area in the frame (f) comprises superimposing the image area and a copy of the image area shifted by a predetermined offset,
wherein said predetermined offset is determined based on the difference between the determined depth value at the position in the depth map (d) corresponding to the position of the identified gaze point (g) in the display area (51) and the depth value in the depth map (d) corresponding to the position of the area in the frame (f) ; and
wherein elements in the image area having values in the depth map which are different from the depth map value at the gaze point (g) are blurred, and only an image element at an area of the gaze point (g) is displayed sharp.

7. The method according to claim 6, further comprising a step of displaying (150) the blurred image area in the frame on the display area (51).

8. The method according to claim 6 or 7, wherein said obtaining step (110) comprises a step of receiving (105) stereoscopic image data and computing a frame (f) and a depth map (d) based on the received stereoscopic image data.

9. A computer program product adapted to perform the method according to any of claims 6 to 8.

## Patentansprüche

1. Bildverarbeitungsgerät (1) zum Verarbeiten von 3D-Bilddaten, umfassend:
Bilddatengewinnungsmittel (10), die dazu angepasst sind, auf einem Anzeigebereich (51) anzuzeigende Bilddaten zu gewinnen, wobei die Bilddaten einen Rahmen (f) und eine dem Rahmen (f) zugeordnete Tiefenkarte (d) umfassen;
Blickerfassungsmittel (20), die dazu angepasst sind, einen Blickpunkt (g) eines Benutzers auf dem Anzeigebereich (51) zu identifizieren;
Tiefenbestimmungsmittel (30), die dazu angepasst sind, einen Tiefenwert an einer Position in der Tiefenkarte (d), die der Position des identifizierten Blickpunkts (g) im Anzeigebereich (51) entspricht, zu bestimmen; und
ein Verwischungsmittel (40), das dazu angepasst ist, einen Bildbereich im Rahmen (f) auf der Grundlage der Differenz zwischen dem bestimmten Tiefenwert und einem Tiefenwert in der Tiefenkarte (d), welcher der Position des Bildbereichs im Rahmen (f) entspricht, zu verwischen,
**dadurch gekennzeichnet, dass**
das Verwischungsmittel dazu angepasst ist, den Bildbereich und eine um einen vorbestimmten Versatz verschobene Kopie des Bildbereichs übereinanderzulegen,
wobei der vorbestimmte Versatz auf der Grundlage der Differenz zwischen dem bestimmten Tiefenwert an der Position in der Tiefenkarte (d), die der Position des identifizierten Blickpunkts (g) im Anzeigebereich (51) entspricht, und dem Tiefenwert in der Tiefenkarte (d), welcher der Position des Bereichs im Rahmen (f) entspricht, bestimmt wird;
wobei Elemente im Bildbereich mit Werten in der Tiefenkarte, die sich vom Tiefenkartenwert am Blickpunkt (g) unterscheiden, verwischt werden und nur ein Bildelement an einem Bereich des Blickpunkts g) scharf angezeigt wird.

2. Bildverarbeitungsgerät (1) nach Anspruch 1, wobei das Blickerfassungsmittel (20) eine Kamera umfasst, die dazu angepasst ist, ein Auge des Benutzers zu überwachen.

3. Bildverarbeitungsgerät (1) nach Anspruch 2, ferner umfassend Alarmierungsmittel (25), die dazu angepasst sind, eine vordefinierte Bewegung des Blickpunkts (g) des Benutzers zu identifizieren und einen Alarm auszugeben, wenn eine vordefinierte Bewegung des Blickpunkts (g) des Benutzers identifiziert wurde.

4. Bildverarbeitungsgerät (1) nach einem der Ansprüche 1 bis 3, ferner umfassend Anzeigemittel (50), die dazu angepasst sind, den verwischten Bildbereich im Rahmen auf dem Anzeigebereich (51) anzuzeigen.

5. Bildverarbeitungsgerät (1) nach Anspruch 4, wobei das Anzeigemittel (50) ein Head-Up-Display, einen Projektor oder eine Anzeige eines tragbaren Computers, eines Tablet-Computers oder eines Smartphones umfasst.

6. Bildverarbeitungsverfahren zum Verarbeiten von auf einem Anzeigebereich (51) anzuzeigenden 3D-Bilddaten, wobei das Verfahren die folgenden Schritte umfasst:
Gewinnen (110) von Bilddaten, wobei die Bilddaten einen Rahmen (f) und eine dem Rahmen (f) zugeordnete Tiefenkarte (d) umfassen;
Identifizieren (120) eines Blickpunkts (g) eines Benutzers auf dem Anzeigebereich (51);
Bestimmen (130) eines Tiefenwerts an einer Position in der Tiefenkarte (d), die der Position des identifizierten Blickpunkts (g) auf dem Anzeigebereich (51) entspricht; und
Verwischen (140) eines Bildbereichs im Rahmen (f) auf der Grundlage der Differenz zwischen dem bestimmten Tiefenwert und einem Tiefenwert in der Tiefenkarte (d), welcher der Position des Bildbereichs (51) im Rahmen (f) entspricht,
**dadurch gekennzeichnet, dass**
der Schritt des Verwischens (140) eines Bereichs im Rahmen (f) das Übereinanderlegen des Bildbereichs und einer um einen vorbestimmten Versatz verschobenen Kopie des Bildbereichs umfasst,
wobei der vorbestimmte Versatz auf der Grundlage der Differenz zwischen dem bestimmten Tiefenwert an der Position in der Tiefenkarte (d), die der Position des identifizierten Blickpunkts (g) im Anzeigebereich (51) entspricht, und dem Tiefenwert in der Tiefenkarte (d), welcher der Position des Bereichs im Rahmen (f) entspricht, bestimmt wird und
wobei Elemente im Bildbereich mit Werten in der Tiefenkarte, die sich vom Tiefenkartenwert am Blickpunkt (g) unterscheiden, verwischt werden und nur ein Bildelement an einem Bereich des Blickpunkts (g) scharf angezeigt wird.

7. Verfahren nach Anspruch 6, ferner umfassend einen Schritt des Anzeigens (150) des verwischten Bildbereichs im Rahmen auf dem Anzeigebereich (51).

8. Verfahren nach Anspruch 6 oder 7, wobei der Gewinnungsschritt (110) einen Schritt des Empfangens (105) stereoskopischer Bilddaten und des Berechnens eines Rahmens (f) und einer Tiefenkarte (d) auf der Grundlage der empfangenen stereoskopischen Bilddaten umfasst.

9. Computerprogrammprodukt, das dazu angepasst ist, das Verfahren nach einem der Ansprüche 6 bis 8 auszuführen.

## Revendications

1. Appareil de traitement d'images (1) pour le traitement de données d'images 3D, comprenant :
un moyen d'obtention de données d'images (10) adapté pour obtenir des données d'images devant être affichées sur une zone d'affichage (51), les données d'images comprenant un cadre (f) et une carte de profondeur (d) associée avec le cadre (f) ;
un moyen de détection de regard (20) adapté pour identifier un point de regard (g) d'un utilisateur sur la zone d'affichage (51) ;
un moyen de détermination de profondeur (30) adapté pour déterminer une valeur de profondeur à une position dans la carte de profondeur (d) correspondant à la position du point de regard (g) identifié dans la zone d'affichage (51) ; et
un moyen de brouillage (40) adapté pour brouiller une zone d'image dans le cadre (f) en se basant sur la différence entre la valeur de profondeur déterminée et une valeur de profondeur dans la carte de profondeur (d) correspondant à la position de la zone d'image dans le cadre (f),
**caractérisé en ce que**
ledit moyen de brouillage est adapté pour superposer la zone d'image et une copie de la zone d'image déplacée par un décalage prédéterminé,
ledit décalage prédéterminé est déterminé en se basant sur la différence entre la valeur de profondeur déterminée à la position dans la carte de profondeur (d) correspondant à la position du point de regard (g) identifié dans la zone d'affichage (51) et la valeur de profondeur dans la carte de profondeur (d) correspondant à la position de la zone dans le cadre (f) ; ;
les éléments dans la zone d'image ayant des valeurs dans la carte de profondeur qui sont différentes de la valeur de carte de profondeur au point de regard (g) étant brouillés, et uniquement un élément d'image dans une zone du point de regard (g) étant affiché avec netteté.

2. Appareil de traitement d'images (1) selon la revendication 1, ledit moyen de détection de regard (20) comprenant une caméra adaptée pour surveiller un oeil de l'utilisateur.

3. Appareil de traitement d'images (1) selon la revendication 2, comprenant en outre un moyen d'alerte (25) adapté pour identifier un mouvement prédéfini du point de regard (g) de l'utilisateur et pour émettre une alerte si un mouvement prédéfini du point de regard (g) de l'utilisateur a été identifié.

4. Appareil de traitement d'images (1) selon l'une quelconque des revendications 1 à 3, comprenant en outre un moyen d'affichage (50) adapté pour afficher la zone d'image brouillée dans le cadre sur la zone d'affichage (51).

5. Appareil de traitement d'images (1) selon la revendication 4, ledit moyen d'affichage (50) comprenant un affichage tête haute, un projecteur ou un écran d'un ordinateur portable, une tablette électronique ou un smartphone.

6. Procédé de traitement d'images pour traiter des données d'images 3D devant être affichées sur une zone d'affichage (51), le procédé comprenant les étapes de :
obtenir (110) des données d'image, lesdites données d'images comprenant un cadre (f) et une carte de profondeur (d) associée au cadre (f) ;
identifier (120) un point de regard (g) d'un utilisateur sur la zone d'affichage (51) ;
déterminer (130) une valeur de profondeur à une position dans la carte de profondeur (d) correspondant à la position du point de regard (g) identifié sur la zone d'affichage (51) ; et
brouiller (140) une zone d'image dans le cadre (f) en se basant sur la différence entre la valeur de profondeur déterminée et une valeur de profondeur dans la carte de profondeur (d) correspondant à la position de la zone d'image (51) dans le cadre (f),
**caractérisé en ce que**
ladite étape de brouillage (140) d'une zone dans le cadre (f) comprend la superposition de la zone d'image et d'une copie de la zone d'image déplacée par un décalage prédéterminé,
ledit décalage prédéterminé étant déterminé en se basant sur la différence entre la valeur de profondeur déterminée à la position dans la carte de profondeur (d) correspondant à la position du point de regard (g) identifié sur la zone d'affichage (51) et la valeur de profondeur dans la carte de profondeur (d) correspondant à la position de la zone dans le cadre (f) ; et
les éléments dans la zone d'image ayant des valeurs dans la carte de profondeur qui sont différentes de la valeur de carte de profondeur au point de regard (g) étant brouillés, et uniquement un élément d'image dans une zone du point de regard (g) étant affiché avec netteté.

7. Procédé selon la revendication 6, comprenant en outre une étape d'affichage (150) de la zone d'image brouillée dans le cadre sur la zone d'affichage (51).

8. Procédé selon la revendication 6 ou 7, ladite étape d'obtention (110) comprenant une étape de réception (105) de données d'images stéréoscopiques et de calcul d'un cadre (f) et d'une carte de profondeur (d) en se basant sur les données d'images stéréoscopiques reçues.

9. Programme d'ordinateur adapté pour exécuter le procédé selon l'une quelconque des revendications 6 à 8.
